Europäisches Patentamt

European Patent Office

Office européen des brevets

(11) Veröffentlichungsnummer: **0 227 185**
**A2**

# (12) EUROPÄISCHE PATENTANMELDUNG

(21) Anmeldenummer: **86202292.8**

(22) Anmeldetag: **16.12.86**

(51) Int. Cl.⁴: **H04M 1/72**

(30) Priorität: **21.12.85 DE 3545572**

(43) Veröffentlichungstag der Anmeldung:
**01.07.87 Patentblatt 87/27**

(84) Benannte Vertragsstaaten:
**AT BE CH DE ES FR GB LI SE**

(71) Anmelder: **Philips Patentverwaltung GmbH**
**Billstrasse 80**
**D-2000 Hamburg 28(DE)**
**DE**
Anmelder: **N.V. Philips' Gloeilampenfabrieken**
**Groenewoudseweg 1**
**NL-5621 BA Eindhoven(NL)**
**BE CH ES FR GB LI SE AT**

(72) Erfinder: **Ranner, Georg, Ing.-grad.**
**Nürnberger Strasse 60**
**D-8560 Lauf(DE)**
Erfinder: **Tasto, Manfred, PH. D., Dipl.-Ing.**
**Peter-Henlein-Strasse 13**
**D-8560 Lauf(DE)**

(74) Vertreter: **Dreykorn-Lindner, Werner et al**
**Philips Patentverwaltung GmbH Postfach 10**
**51 49 Billstrasse 80**
**D-2000 Hamburg 28(DE)**

(54) **Verfahren und Einrichtung zum unhörbaren Kennungsaustausch zwischen einem Funkstationspaar.**

(57) Bei Funkstationspaaren, insbesondere einem schnurlosen Telefon, wird zur Sicherung gegen unbefugte Belegung der Basisstation ein Kennungaustausch vorgenommen. Die Kennung ist eine Codekombination, welche dem betreffenden Funkstationspaar individuell zugeordnet ist und welche im Sprachband als sogenannte Inband-Signalisierung übertragen wird.

Um zu vermeiden, daß während des Gesprächs in gewissen Zeitabständen die Sprachverbindung unterbrochen und die Kennung ausgetauscht wird, wird während des Gesprächs wiederholt ein nichthörbarer Kennungsaustausch zwischen den Stationen des Funkstationspaars durchgeführt, indem die Kennung in einem außerhalb des für die Sprachübertragung vorgesehenen Frequenzbands liegenden Frequenzband übertragen wird. Dadurch wird eine gesprächsbeeinträchtigende Kennungeinkopplung in Sprachband vermieden und gleichzeitig die Zugehörigkeit der Stationen des Funkstationspaars überwacht.

FIG. 1a

FIG. 1b

## Verfahren und Einrichtung zu.n unhörbaren Kennungsaustausch zwischen einem Funkstationspaar

Die Erfindung betrifft ein Verfahren zum Kennungsaustausch zwischen einem Funkstationspaar, insbesondere bei einem schnurlosen Telefon, gemäß dem Oberbegriff des Patentanspruchs 1.

Bei Fernsprechapparaten besteht in der Regel über ein Kabel von einigen Metern Länge eine Verbindung zum jeweiligen Fernsprechanschluß. Die Verbindung zwischen dem Hörer und dem Fernsprechapparat über die Telefonapparateschnur ist noch wesentlich kürzer. Dadurch ist der Benutzer beim Telefonieren an einen bestimmten Ort gebunden und kann sich während des Gesprächs kaum vom jeweiligen Ort entfernen.

Eine gewisse Verbesserung brachten sogenannte Freisprecheinrichtungen, die es dem Benutzer erlauben, sich während des Gesprächs einige Meter im Raum frei zu bewegen.

Um den Bewegungsbereich des Benutzers noch mehr zu erweitern, werden in zahlreichen Ländern zunehmend sogenannte schnurlose Telefone eingesetzt. Die Informationsübertragung zwischen einer Basisstation und der zugehörigen Mobilstation des Funkstationspaars (schnurloses Telefon) erfolgt über einen Funkkanal. Die Basisstation wird mittels einer Verbindungsdose an einen Hauptanschluß oder eine Nebenstellenanlage angeschlossen, so daß für den Benutzer der Zugang zum öffentlichen Fernsprechnetz gegeben ist. Dadurch, daß die Basisstation und die Mobilstation über einen Funkkanal miteinander in Verbindung stehen, ist der Bewegungsbereich des Benutzers auf einen Umkreis von etwa 200 Meter zum jeweiligen Anschluß erweitert.

In der Bundesrepublik Deutschland stehen für die Informationsübertragung 40 Funkkanäle zur Verfügung, welche im Frequenzbereich von 900 MHz liegen. Mit der obengenannten Übertragungsreichweite ergibt sich für die Belegung des gleichen Funkkanals durch zueinander benachbarte schnurlose Telefone eine geringe Belegtwahrscheinlichkeit. Liegt ein Verbindungswunsch vor, so wird ein Suchlauf nach einen freien Funkübertragungskanal gestartet und belegt. Um sicherzustellen, daß die zwischen dem Funkstationspaar zu übertragende Nachricht von keinem anderen Funkstationspaar abgehört werden kann, bzw. um die Gebührenzuordnung sicherzustellen, weisen die Funkstationspaare jeweils eine Codeeinrichtung auf, wobei der Code (Kennung) jedes Senders in der Mobilstation bzw. der Basisstation gerätefest und von der Anschlußnummer des Fernsprechteilnehmers unabhängig ist.

In der Mobilstation wird die Funkkanalsuche durch Betätigung der Gabelumschalt-Taste eingeleitet. Bei der Basisstation löst ein erkannter ankommender Ruf auf der Amtsleitung die Funkkanalsuche aus. In der EP-B1 0 074 940 ist die Funkkanalsuche und der beim Funkverbindungsaufbau durchgeführte Kennungsaustausch näher beschrieben. Ein als frei erkannter Funkübertragungskanal wird belegt, der Sender aktiviert und die Kennung als Datentelegramm über den Funkübertragungskanal gesendet. Nach jeder Ausgabe eines solchen Datentelegramms wird auf ein Quittungstelegramm der entsprechenden Gegenstation gewartet. Wird ein solches Quittungstelegramm empfangen, so wird die empfangene Kennung (Quittungstelegramm) mit der eigenen Kennung verglichen. Bei Identität stellen die entsprechenden Sender des Funkstationspaares die Kennungsausgabe ein.

In ntz, Band 38 (1985), Heft 7, Seiten 468 bis 471 ist ein schnurloses Telefon für den 900 MHz-Bereich beschrieben. Auf Seite 468 ist angegeben, daß die 40 Funkkanäle automatisch verwaltet werden und daß in der Basisstation im Ruhezustand nacheinander alle 40 Funkkanäle abgesucht werden, um zu erkennen, wenn im Falle des Anrufs eine Anforderung von der Mobilstation für die Verbindungsaufbau vorliegt. Die Kanalabfrage erfolgt zyklisch, wobei zunächst geprüft wird, ob der gerade abgefragte Funkkanal belegt ist und falls dies nicht zutrifft wird dieser Funkkanal als frei notiert und nachfolgend wird die Umschaltung auf den im Zyklus nächsten Funkübertragungskanal vorgenommen. Auf Seite 470 ist angegeben, daß während des Gesprächs alle 15 s ein Kennungaustausch stattfindet. Während dieses Kennungsaustausches ist kurzzeitig die Sprachübertragung unterbrochen und die Übertragung des Datentelegramms ist in der Austastlücke leise zu hören. Die kurzzeitige Unterbrechung der Sprachübertragung wird von dem Benutzer des schnurlosen Telefons in der Regel als störend empfunden.

Der Erfindung liegt die Aufgabe zugrunde, ein solches Verfahren zum Kennungsaustausch während des Gesprächs anzugeben, welches zu keiner Gesprächsunterbrechung führt.

Diese Aufgabe wird erfindungsgemäß durch ein Verfahren mit den Merkmalen des Patentanspruchs 1 gelöst.

Das erfindungsgemäße Verfahren weist den Vorteil auf, daß ein unhörbarer Kennungsaustausch während des Gesprächs stattfindet, wobei das Datentelegramm als nichthörbare Außerband-Signalisierung übertragen wird. Die Umschaltung von Inband-Signalisierung auf nichthörbare Außerband-Signalisierung übertragen wird. Die Umschaltung von Inband-Signalisierung auf nichthörbare Außerband-Signalisierung ist einfach durchzuführen, wobei zur Signalerzeugung und Auswertung in vorteilhafter Weise handelsübliche Mikroprozessoren verwendet werden können.

Wird gemäß Patentanspruch 2 die Kennung auf mehrere Telegrammblöcke aufgeteilt, so werden die Vorteile einer schnellen Reaktionszeit und eines geringen Frequenzdrifts während der Übertragung der Kennung erreicht.

Die Ausführungsform gemäß Patentanspruch 3 weist den Vorteil auf, daß die mit reduziertem Pegel übertragene Kennung nur einen geringen Beitrag zum Gesamtsignal liefert, so daß die Kennung das Gesamtsignal nur gering beeinflußt und sich nicht als Störung bemerkbar macht.

Werden gemäß Patentanspruch 4 bei gestörtem Betrieb die einzelnen Telegrammblöcke wiederholt übertragen, so kann auf einfache Art und Weise die Übertragungssicherheit erhöht werden.

Erfolgt die Übertragung der Kennung während des Gesprächs unter Anwendung eines Amplitudenmodulationsverfahrens und die Übertragung der Kennung beim Verbindungsaufbau unter Anwendung eines Frequenzumtastverfahrens (Patentanspruch 5), so wird der Vorteil einer einfachen Verarbeitung im Mikroprozessor erreicht und für Symmetrie und Filterung ist nur ein geringer zusätzlicher Schaltungsaufwand erforderlich.

Mit dem im Patentanspruch 6 angegebenen Telegrammaufbau ist eine einfache Synchronisation zwischen den Stationen des Funkstationspaars erreichbar.

Bevorzugte Ausführungsformen des erfindungsgemäßen Verfahrens sind in weiteren Unteransprüchen angegeben.

Die Schaltungsanordnung zur Durchführung des erfindungsgemäßen Verfahrens ist einfach aufgebaut und erfordert sendeseitig als zusätzlichen Schaltungsaufwand lediglich einen Umschalter und einen zusätzlichen Tiefpaß sowohl in der Basisstation wie auch in der Mobilstation. Für die Trennung von Inbandsignale und Außerbandsignale müssen als Tiefpaßfilter keine steilflankigen Filter verwendet werden.

Die Erfindung wird im folgenden anhand einer in der Zeichnung dargestellten Ausführungsform näher beschrieben und erläutert. Es zeigt:

Fig. 1 ein Blockschaltbild des Funkstationspaars und

Fig. 2 die einzelnen Signalisierungsphasen beim erfindungsgemäßen Verfahren.

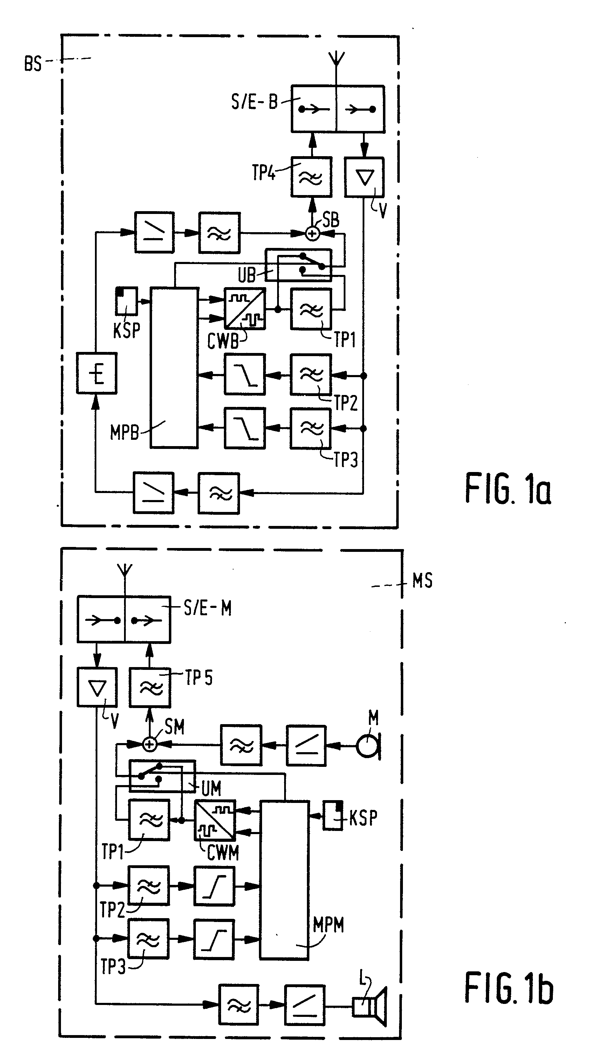

In Fig. 1 ist das Blockschaltbild des Funkstationspaars, bestehend aus einer Basisstation BS und einer Mobilstation MS, mit den Einrichtungen dargestellt, soweit dies für das Verständnis der Erfindung erforderlich ist.

Die Basisstation BS und die Mobilstation MS weisen jeweils einen Kennungsspeicher KSP auf, welcher mit einem Mikroprozessor MPB bzw. MPM verbunden ist. Die mittels des Mikroprozessors MPB bzw. MPM ausgelesene Kennung wird einem Codewandler CWB und CWM zugeführt. Der Ausgang des Codewandlers CWB bzw. CWM ist sowohl mit einem Tiefpaß TP1 als auch einem Umschalter UB bzw. UM verbunden. Der Umschalter UB bzw. UM ist jeweils mit einem Verknüpfungsglied beispielsweise, Summierverstärker SB bzw. SM verbunden, dessen Ausgang über jeweils einen Tiefpaß TP4 bzw. TP5 mit jeweils einer Sende-Empfangseinrichtung S/E-B bzw. S/E-M in Verbindung steht. An die Sende-Empfangseinrichtung S/E-B in der Basisstation BS bzw. S/E-M in der Mobilstation MS ist im Empfangszweig ein Verstärker V angeschlossen, dessen Ausgang mit jeweils einem Tiefpaß TP2 bzw. TP3 verbunden ist. Die Grenzfrequenz des Tiefpaßes TP2 liegt bei ca. 150 Hz und die Grenzfrequenz des Tiefpaßes TP3 liegt bei etwa 1,6 kHz. Mittels der beiden Tiefpäße TP2 bzw. TP3 wird die Trennung von Inband-und Außerband-Signalisierung vorgenommen, wobei die jeweiligen Signale mittels dem Mikroprozessor MPB bzw. MPM ausgewertet werden.

Im "gesprächslosen Zustand" wird im Sprachband, welches beim öffentlichen Fernsprechnetz in dem Frequenzband von 300 bis 3 kHz liegt, die Kennung, beispielsweise ein Datentelegramm mit einer Bitrate von 1,2 kbit/s, übertragen. Mittels dieser Inband-Signalisierung kann vor Gesprächsbeginn ein schneller Kennzeichenaustausch vorgenommen werden.

Während des Gesprächs soll eine wahrnehmbare Unterbrechung der Sprechverbindung bei der Durchführung eines solchen vorgenannten Kennungsaustausches vermieden werden, wobei beim erfindungsgemäßen Verfahren in dieser Phase eine sogenannte Außerbandsignalisierung mit einer Überlagerung von Kennung (Datentelegramm) und Sprache vorgenommen wird. Für die Übertragung dieses Datentelegramms wird eine wesentlich niedrigere Bitrate, z.B. eine Bitrate von 32 bit/s, verwendet.

Zur Modulation der Kennung wird bei der Inband-Signalisierung die Basisband-Modulation "SIN-FFSK" oder "Manchester" mit den Kennfrequenzen 0,6 kHz und 1,2 kHz verwendet. Bei der Außerband-Signalisierung wird eine außerhalb des Sprachbandes liegende Tonfrequenz mit der halben Datenrate getastet, wobei der Hilfsträger beispielsweise bei 128 Hz liegt.

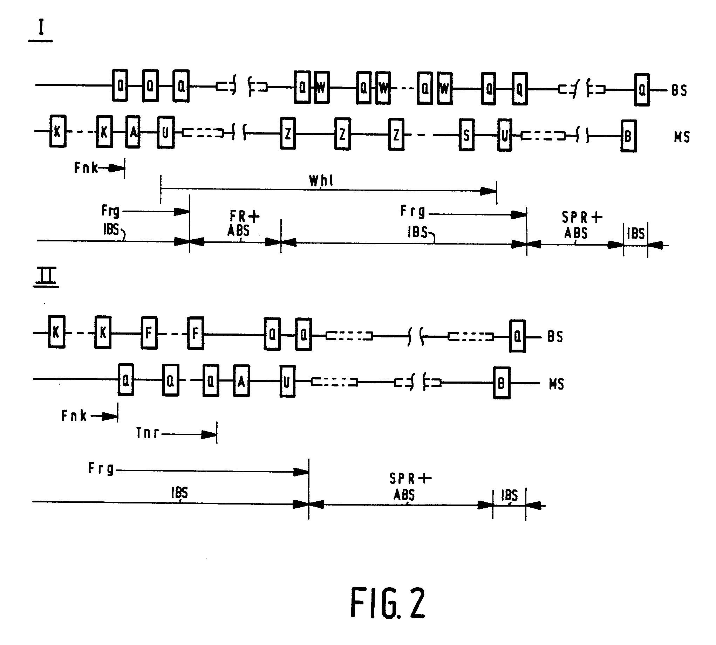

In Fig. 2 sind die verschiedenen Signalisierungsphasen beim erfindungsgemäßen Verfahren näher dargestellt. Bei einem von der Mobilstation MS abgehenden Ruf wird bei Drücken des Gabelumschalters zum Verbindungsaufbau zwischen Mobilstation MS und Basisstation BS die Kennung K mehrfach ausgelesen und in der Basisstation quittiert (Quittung Q). Auch die nachfolgende Amtsanschaltung A wird in der Basisstation BS quittiert und danach wird eine Signalisierung-Umschaltung U, welche ebenfalls quittiert wird, vorgenommen. Die Übertragung der vorgenannten Datentelegramme wird jeweils mittels Inband-Signalisierung IBS durchgeführt. Nach erfolgter Umschaltung auf die Außerbandsignalisierung ABS wird der Freiton zur Mobilstation MS übertragen. Werden nun mittels einer in der Mobilstation MS angeordneten Tastatur Wahlziffern Z eingegeben, so erfolgt die Umschaltung von Außerband-Signalisierung ABS auf Inband-Signalisierung IBS. Die erste von der Mobilstation MS ausgesandte Ziffer wird von der Basisstation BS quittiert (mittels Q) und die Basisstation BS sendet anschließend eine Wahlzeichenanforderung W. Danach folgen jeweils die Ziffern Z bis mittels eines Signals Wahlspeicher S der Basisstation BS mitgeteilt wird, daß die Wahlprozedur abgeschlossen ist. Danach erfolgt mittels der Signalisierungs-Umschaltung U die entsprechende Freigabe für die Sprache und die Umschaltung auf Außerband-Signalisierung ABS. Während der Übertragung von Inband-Signalen ist über eine entsprechende Stummschaltung der nicht benötigte NF-Zweig "gemutet".

Für einen in der Basisstation BS ankommenden Ruf werden nun von der Basisstation BS unter Verwendung der Inband-Signalisierung IBS jeweils zum Verbindungaufbau Kennungen K übertragen, welche von der Mobilstation MS quittiert werden. Nach dem Verbindungsaufbau wird der Tonruf mittels Telegramme F aktiviert, danach wird eine Amtsanschaltung A und nach erfolgter Amtsanschaltung die entsprechende Signalisierungs-Umschaltung U vorgenommen. Ist das Gespräch beendet, so wird von der Station MS ein Verbindungsabbruch B durchgeführt.

Gemäß einer bevorzugten Ausführungsform wird die Kennung auf verschiedene Telegrammblöcke aufgeteilt. Die einzelnen Telegrammblöcke weisen nacheinander eine Blocksynchronisation, eine Blocknummer und den jeweiligen Kennungsteil auf. Die Blocksynchronisation ist beispielsweise 4 Bit, die Blocknummer 2 Bit und bei einer Aufteilung auf vier Blöcke ist der Kennungsteil 5 Bit lang. Bei einer Kennung mit 20 Bit können ca. 1 Million verschiedener Kennungen vergeben werden, so daß eine hohe Abhörsicherheit erreicht werden kann. Für die Übertragung eines solchen Blocks und der o.g. Bitrate von 32 bit/s wird eine Zeit von 344 ms benötigt und die jeweilige Telegrammpause beträgt beispielsweise 31 ms.

Die asynchrone Datenübertragung in Verbindung mit Halbduplex-Betrieb entlastet den Mikroprozessor und sorgt für eine entsprechende Störungsreduktion bei Zweidrahtbetrieb. Die Umschaltung von Außerband-auf Inbandsignalisierung wird bei fehlender Telegrammaussendung vorgenommen, während die Umschaltung von Inband-auf Außerband-Signalisierung mittels eines speziellen Telegramms vorgenommen wird. Während das Inbandsignal mit gleichem Pegel wie das Sprachsignal übertragen wird, ist das Außerbandsignal im Pegel reduziert und wird dem Sprachsignal überlagert. Während der Übertragung von Inbandsignalen sind die akustischen Wandler (L,M) im -schnurlosen Telefon abgeschaltet. Für die Inband-Signalisierung IBS sind im Vergleich zur Außerband-Signalisierung ABS breitbandige Filter erforderlich. Der Mikroprozessor MPB bzw. MPM übernimmt hierbei die Umschaltung der Filterung, die Signalerzeugung und die Signalerkennung.

Bei einem schnurlosen Telefon wird alle 15 s ein Kennungsaustausch vorgenommen, wobei für den Kennungsaustausch beim Stand der Technik eine Datenübertragung mit 1,2 kbit/s im Sprachband und eine entsprechende Stummschaltung der akustischen Wandler und der Telefonleitung während der Datenübertragung vorgenommen wurde. Beim erfindungsgemäßen Verfahren wird ein unhörbarer Kennungsaustausch während des Gesprächs vorgenommen, wobei der Kennungsaustausch bei fehlerloser Übertragung nach einer Zeit von ca. 3 Sekunden abgeschlossen ist. Dadurch kann auf einfache Art und Weise zur Erhöhung der Sicherheit, daß nur zueinander gehörende Funkstationspaare miteinander in Verbindung stehen, ein Kennungsaustausch während der Zeit von 15 s mehrfach vorgenommen werden.

## Ansprüche

1. Verfahren zum Kennungsaustausch zwischen einem Funkstationspaar, insbesondere einem schnurlosen Telefon, mit einer Vielzahl von Funkkanälen, bei dem zum Verbindungsaufbau über einen als frei erkannten Funkkanal (Inband-Signalisierung) ein Kennungsaustausch zwischen dem einander zugeordneten Funkstationspaar vorgenommen wird und bei dem bei Übereinstimmung der Kennung die Funkverbindung durchgeschaltet wird, dadurch gekennzeichnet, daß während des Gesprächs wiederholt eine Umschaltung von Inband-Signalisierung (IBS) auf Außerband-Signalisierung (ABS) vorgenommen wird und so ein nicht hörbarer Kennungsaustausch zwischen den Stationen (BS,MS) des Funkstationspaars durchgeführt wird, wobei die Kennung (K) in einem außerhalb des für Sprachübertragung vorgesehenen Frequenzbands liegenden Frequenzband übertragen wird.

2. Verfahren nach Anspruch 1, dadurch gekennzeichnet, daß zum unhörbaren Kennungsaustausch die Kennung (K) auf mehrere Telegrammblöcke aufgeteilt wird.

3. Verfahren nach Anspruch 1, dadurch gekennzeichnet, daß beim unhörbaren Kennungaustausch die Außerbandsignale mit reduziertem Pegel dem Sprachsignal überlagert werden.

4. Verfahren nach Anspruch 2, dadurch gekennzeichnet, daß bei gestörtem Betrieb ein als fehlerhaft erkannter Telegrammblock mehrfach wiederholt wird.

5. Verfahren nach Anspruch 1, dadurch gekennzeichnet, daß die Außerbandsignale amplitudenmoduliert und die Inbandsignale frequenzmoduliert werden.

6. Verfahren nach Anspruch 2, dadurch gekennzeichnet, daß zwischen den Telegrammblöcken jeweils eine Telegrammpause vorgesehen ist.

7. Verfahren nach Anspruch 1, dadurch gekennzeichnet, daß die Kennung (K) während des Gesprächs regelmäßig in Abständen von einigen Sekunden übertragen wird.

8. Schaltungsanordnung zur Durchführung des Verfahrens nach Anspruch 1, dadurch gekennzeichnet, daß in Senderichtung die in der Basisstation (BS) und in der Mobilstation (MS) in einem Kennungsspeicher (KSP) aufgenommene Kennung (K) mittels einem Mikroprozessor (MPB, MPM) ausgelesen und einem Codewandler (CWB, CWM) zugeführt wird, daß mit dem Codewandler (CWB, CWM) ein Tiefpaß (TP1) und ein Umschalter (UB, UM) verbunden sind, daß für die Umschaltung von Inband-auf Außerband-Signalisierung (IBS,ABS) durch den Mikroprozessor (MPB, MPM) entweder der Ausgang des Tiefpasses (TP1) oder der Ausgang des Codewandlers (CWB, CWM) mit dem Umschalter (UB, UM) verbunden ist und daß in Empfangsrichtung in der Basisstation (BS) und in der Mobilstation (MS) die Trennung von Inband- und Außerband-Signalisierung (IBS,ABS) mittels zweier parallel zueinander liegender und im Empfangszweig zwischen Mikroprozessor (MPB, MPM) und Empfangsverstärker V angeordneter Tiefpaßfilter (TP2, TP3) unterschiedlicher Grenzfrequenz vorgenommen wird.

9. Schaltungsanordnung nach Anspruch 8, dadurch gekennzeichnet, daß die Außerband-Signalisierung (ABS) im Frequenzbereich unterhalb von 300 Hz übertragen wird, wodurch die Übertragungsbandbreite reduziert und die Signalverarbeitung im Mikroprozessor (MPB,MPM) vereinfacht wird.

10. Sender zur Verwendung in einer Schaltungsanordnung nach Anspruch 8, dadurch gekennzeichnet, daß in einem Kennungsspeicher (KSP) aufgenommene Kennung (K) mittels einem Mikroprozessor (MPB, MPM) ausgelesen und einem Codewandler (CWB, CWM) zugeführt wird, daß mit dem Codewandler (CWB, CWM) ein Tiefpaß (TP1) und ein Umschalter (UB, UM) verbunden sind, daß für die Umschaltung von Inband-und Außerband-Signalisierung (IBS, ABS) durch den Mikroprozessor (MPB, MPM) entweder der Ausgang des Tiefpaßes (TP1) oder der Ausgang des Codewandlers (CWB, CWM) mit dem Umschalter (UB, UM) verbunden ist.

11. Empfänger zur Verwendung in einer Schaltungsanordnung nach Anspruch 8, dadurch gekennzeichnet, daß die Trennung von Inband-und Außerband-Signalisierung (IBS, ABS) mittels zweier parallel zueinander liegender und im Empfangszweig zwischen Mikroprozessor (MPB, MPM) und Empfangverstärker (V) angeordneter Tiefpaßfilter (TP2, T3) unterschiedlicher Grenzfrequenz vorgenommen wird.

FIG. 1a

FIG.1b

1·Ⅱ·PHD 85−357

FIG. 2